# EUROPÄISCHE PATENTSCHRIFT

(11) **EP 0 801 340 B1**
(45) Veröffentlichungstag und Bekanntmachung des Hinweises auf die Patenterteilung: **23.10.2002**
(21) Anmeldenummer: 97105838.3
(22) Anmeldetag: 09.04.1997
(51) Int. Cl.: G05B 19/4093, B23H 1/02

(54) **Verfahren und Vorrichtung zur Steuerung einer Werkzeugmaschine, insbesondere einer Funkenerosionsmaschine**
Method and device for controlling a machine tool, in particular an electro-erosion machine
Méthode et dispositif de commande d'une machine-outil, en particulier machine d'usinage par électro-érosion

(30) Priorität: 10.04.1996 DE 19614202
(43) Veröffentlichungstag der Anmeldung: 15.10.1997
(73) Patentinhaber: AGIE SA, 6616 Losone (CH)
(72) Erfinder: Riva, Luciano, 28044 Verbania (IT); De Maria, Renzo, 6500 Bellinzona (CH)
(74) Vertreter: von Samson-Himmelstjerna, Friedrich R., Dipl.-Phys.

(56) Entgegenhaltungen:
- EP-A- 0 467 584
- EP-A- 0 600 146
- WO-A-92/15050
- WO-A-96/12218
- US-A- 4 807 108
- US-A- 5 051 912
- US-A- 5 453 933
- US-A- 5 485 620

## Beschreibung

Die Erfindung betrifft ein Verfahren und eine Vorrichtung zur Steuerung einer Werkzeugmaschine, insbesondere einer Funkenerosionsmaschine.

Solche Werkzeugmaschinen verfügen meist über eine numerische Steuerung, z.B. eine NC- oder CNC-Steuerung. Die für die numerische Steuerung benötigten Steuerdaten, wie Lage und/oder Bahn- bzw. Konturdaten der gewünschten Werkstücksbearbeitung, werden in Form von Steuerungseingaben der Steuerungsvorrichtung zugeführt und dort in Steuersignale für Servoantriebe der Werkzeugmaschine umgewandelt.

Als Beispiel hierfür sei eine Funkenerosionsmaschine, d.h. eine Senk- oder Schneiderosionsmaschine genannt. Solche Funkenerosionsmaschinen werden u.a. zur Fertigung von Stempeln und/oder Matrizen aus leitenden Materialien eingesetzt. Vorteilhaft ist die extrem hohe Bearbeitungspräzision. Eine wirtschaftlich sinnvolle Nutzung solcher Funkenerosionsmaschinen besteht vor allem in der Anfertigung von Formen für die Serienfertigung. Hieraus ergibt sich die Notwendigkeit, im Normalbetrieb der Funkenerosionsmaschine vor der Bearbeitung eines oder mehrerer Werkstücke die individuellen - jeweils nur für das betreffende Werkstück gültigen - Steuerdaten einzugeben. Neben der Festlegung der gewünschten Bearbeitungsschritte müssen dabei auch etwaige Störfälle berücksichtigt werden, z.B. ein Drahtriss beim Schneiderodieren, d.h. Situationen während der Bearbeitung, bei denen der Bediener manuell in den Bearbeitungsablauf eingreifen muss. Die Steuerungsvorrichtung hält hierzu den Bearbeitungsablauf bis zum Erhalt eines weiteren Kommandos seitens des Bedieners an und veranlasst diesen beispielsweise ein Ausfallstück, wie es beim Schneiden einer Matrize entsteht oder einen Stempel, zu entfernen oder zu fixieren, ein Werkzeug zu wechseln etc. So kann man folgende zwei Bearbeitungsunterbrechnungen unterscheiden: die geplante vorhersehbare Unterbrechung, z.B. Werkzeugwechsel, Ausfallstückfixierung oder -entfernung, und die nicht vorhersehbare Unterbrechung, z.B. Drahtriss, Kurzschluss, etc..

Beim Vorbereiten der Werkzeugmaschine für einen neuen Bearbeitungsablauf, dem sog. Einrichten, muss der Maschinenbediener daher für die vorhersehbaren Unterbrechungen sogenannte "Breaks" programmieren, an denen der Bearbeitungsablauf anhält und die Maschine weitere Instruktionen vom Bediener erwartet. Mit zunehmender Komplexität der Werkstücksbearbeitung auf modernen Werkzeugmaschinen, z.B. räumliches Erodieren mit einer Funkenerosionsmaschine, wird es für den Maschinenbediener dabei immer schwieriger zu übersehen, welche Bearbeitungen in der Gesamtbearbeitung bereits ausgeführt wurden und wo sich der Bearbeitungsablauf genau befindet.

Dem Stand der Technik entsprechende Steuerverfahren der eingangs genannten Art benötigen Steuerungseingaben in Form abgeschlossener "Programme", sog. sequentielle Steuerprogramme. Ein solches Programm umfasst sämtliche Steuerdaten und legt z.B. fest, welche Schnittbahnen in welcher Qualität an welcher Stelle im zu bearbeitenden Werkstück in welcher Reihenfolge etc. durchgeführt werden sollen. Die Steuerdaten sind in einer sequentiellen Abfolge von Befehlen festgelegt. Dabei bleibt ein einem bestimmten Bearbeitungsschritt entsprechender Befehl solange aktiv, bis durch einen neuen Befehl ein neuer Bearbeitungsschritt im nächsten Schritt der Befehlssequenz des Steuerprogramms festgelegt wird. Tritt in diesem sequentiellen bzw. linearen Bearbeitungsablauf ein nicht vorhersehbarer Störfall auf, so stoppt die Steuerungsvorrichtung den gesamten Bearbeitungsablauf und wartet auf eine Eingabe seitens des Bedieners. So können z.B. über Nacht laufende Maschinen aufgrund eines Störfalles relativ früh im Bearbeitungsablauf stoppen. Nach Beheben des Störfalles kann der grösste Teil der Bearbeitung nachteilig erst am nächsten Tag weiterbearbeitet werden. Derartige Steuerungsvorrichtungen haben damit unerwünschte Stillstandszeiten und arbeiten nicht ausreichend ökonomisch.

Darüber hinaus offenbart die WO-A-96 12218 der Anmelderin, welche Stand der Technik im Sinne von Art. 54 (3) EPÜ ist, ein Verfahren zur Steuerung einer Funkenerosionsmaschine nach dem Oberbegriff von Anspruch 1. Dabei werden die benötigten Steuerungseingaben während und/oder nach ihrer Eingabe in der Steuerung der Maschine einerseits in objektbezogene, d.h. die einzelnen Arbeitsschritte unmittelbar betreffende, Eingaben und andererseits in strategische, d.h. die Abfolge der Arbeitsschritte der Maschine betreffende, Eingaben unterteilt. Diese bekannte Steuerung basiert demnach auf einem objektorientierten Modell, bei welchem die für die Durchführung einer Bearbeitung notwendigen (objektbezogene) Eingaben in der Steuerungseinrichtung in Gruppen zusammengefaßt sind, welche jeweils die für ein Objekt "Arbeitsschritt" notwendigen Steuerungsdaten beinhalten. Speziell bei einem Störfall wird bei der bekannten Steuerung die Bearbeitung unterbrochen und der Unterbrechnungspunkt festgehalten, um später ausgehend von diesem Punkt die Bearbeitung fortzusetzen. Eine Festlegung des Bearbeitungsablaufes durch Auswahl oder Modifikation des Zustandes der Programmbausteine ist in der bekannten Steuerung jedoch nicht möglich. Der Bearbeitungsablauf wird allein durch die bearbeitungsstrategischen Informationen bestimmt, welche die Reihenfolge der abzuarbeitenden Arbeitsschritte (Objekte) festlegen.

Aus EP-A-0 467 584 ist ferner ein computergestütztes Verfahren zur Überwachung von Produktentwicklungs- und Herstellungsprozessen in der Art einer Projektverwaltungssoftware bekannt. Dabei wird die Projektentwicklung abstrakt in Etappen aufgeteilt; und zu jeder Etappe werden die zugehörigen Anforderungen ausgeführt. Es sind des weiteren Mittel zum visuellen Anzeigen des aktuellen Status der Projektentwicklung und der jeweiligen Anforderungen vorgesehen. Somit befaßt sich die Entgegenhaltung bereits nicht mit der Steuerung von Werkzeugmaschinen.

Ein ähnlich fernliegendes Planungsverfahren ist aus der US-A-4 807 108 bekannt.

Die US-A-5 453 933 befaßt sich zwar mit objektorientierter CNC-Programmierung für Werkzeugmaschinen. Sie beschäftigt sich jedoch mit einem anderem Problemkreis, wie die vorliegende Erfindung. Die Entgegenhaltung möchte nämlich eine CNC-Steuerung basierend auf einem objektorientierten Datenmodell so allgemein gestalten, daß die Werkzeugmaschinensteuerung mit möglichst wenig Aufwand für verschiedene Maschinentypen implementierbar ist. Dadurch soll der Entwicklungsaufwand allgemein reduziert werden. Folglich unterscheidet sich die bekannte Steuerung bereits in der Art der verwendeten Objektklassen. Im übrigen gibt es bei der bekannten Steuerung keinen Hinweis darauf, daß die einzelnen Objekte durch jeweils einen Zustand aus einer Gruppe möglicher Bearbeitungszustände beschrieben werden können.

Die vorliegende Erfindung zielt darauf ab, Werkzeugmaschinen, insbesondere Funkenerosionsmaschinen, hinsichtlich ihrer Bedienerfreundlichkeit beim Einrichten und/oder während der Bearbeitung zu verbessern.

Die Erfindung erreicht dieses Ziel durch die Gegenstände der Ansprüche 1 und 9. Bevorzugte Ausgestaltungen der Erfindung sind in den Unteransprüchen 2 bis 8 sowie 10 bis 12 beschrieben.

Danach schafft die Erfindung ein Verfahren zur Steuerung einer Vielzahl von Bearbeitungsvorgängen auf einer Werkzeugmaschine, insbesondere einer Funkenerosionsmaschine, sowie eine hierfür geeignete Vorrichtung, bei welchem/welcher:
a) Gruppen von Bearbeitungsvorgängen jeweils einem oder mehreren Bearbeitungsobjekten, z.B. der Funkenerosionsmaschine ("WZM") als solcher, einem Werkzeugtisch ("TIS"), einer Palette ("PAL") und/oder einer Werkstücksgruppe ("WSG"), einem Werkstück ("WST"), einer Bearbeitungsgruppe ("GRU"), einer Bearbeitung ("ARB"), einem Arbeitsschritt ("AS"), einem Ausfallstück ("AUS"), einer Werkzeuggruppe ("WZG"), einem Werkzeug ("WZ") und/oder einem Bezugspunkt ("BPKT"), zugeordnet werden;
b) die Bearbeitungsobjekte durch jeweils einen Zustand aus je einer Gruppe möglicher Bearbeitungszustände beschrieben werden;
c) der Bearbeitungsablauf durch die Auswahl der Zustände von Bearbeitungsobjekten aus der jeweils zugehörigen Gruppe möglicher Bearbeitungszustande festgelegt wird und/oder wahrend der Bearbeitung veranderbar ist, wobei die aktuellen Zustände der einzelnen Bearbeitungsobjekte ständig überwacht und bei Bedarf angezeigt werden; und
d) bei der Auswahl und/oder Änderung eines Zustandes eines Bearbeitungsobjektes die Verträglichkeit mit Zuständen anderer Bearbeitungsobjekte überprüft wird, und die Zustände anderer Bearbeitungsobjekte an diese Auswahl oder Änderung bei Bedarf angepaßt werden.

Unter "Bearbeitungsobjekt" wird eine organisatorische und strukturelle Einheit verstanden, an welcher von der Steuerung der Werkzeugmaschinen Maßnahmen durchgeführt werden, um dadurch die gewünschte Werkstucksbearbeitung zu erreichen. Die Unterteilung bzw. Zuordnung der Steuerungsmaßnahmen an solche Bearbeitungsobjekte, z.B. an das Werkstück im allgemeinen, an einen speziellen Arbeitsschritt, etc., ermöglicht es dem Maschinenbediener, ohne genaue Kenntnisse des Quellprogramms die Steuerung der Werkzeugmaschine direkt in der Werkstatt einzurichten, d.h. die an den Bearbeitungsobjekten durchzuführenden Maßnahmen festzulegen.

Das erfindungsgemässe Steuerverfahren kann vorteilhaft auch Ereignisse berücksichtigen, welche einem Bearbeitungsobjekt während des Betriebes zustossen. Diese können dem Bediener nach Beenden der Bearbeitung angezeigt werden, so dass dieser anhand des Zustandes der einzelnen Bearbeitungsobjekte genau erkennen kann, welche Ereignisse während der Gesamtbearbeitung aufgetreten sind.

Bevorzugt kann der Bediener dann jederzeit, d.h. sowohl vor dem Start der Gesamtbearbeitung, wie auch während und/oder nach einem Bearbeitungsstopp, beliebig den Zustand eines Bearbeitungsobjektes ändern, beispielsweise indem er ihn aus einer Vorauswahl einer Gruppe geeigneter Zustände (Zustandsgruppe) auswählt. Dabei kann bevorzugt für ein bestimmtes Bearbeitungsobjekt eine Vorauswahl an geeigneten Zuständen getroffen werden, die sich beispielsweise aus den Zuständen anderer unter- und/oder über-geordneter Bearbeitungsobjekte ermitteln lässt und dem Bediener je nach Bedarf angezeigt wird.

Vorzugsweise sind die Zustandsgruppen eines Bearbeitungsobjektes dabei als sog. "offene" Listen ausgestattet. Der Maschinenbediener kann so bei Bedarf weitere mögliche Zustände der Liste hinzufügen und so individuelle Verhaltensmuster bei Ausnahmesituationen definieren. Dies hat den Vorteil, dass beispielsweise betriebliches Know-how bezüglich bestimmter Arbeitsschritte etc. berücksichtigt und die Steuerungsvorrichtung dauerhaft angepasst werden kann.

Es ist von besonderem Vorteil, wenn die Bearbeitungsobjekte bevorzugt in Objektklassen hierarchisch unterteilt sind, um dem Bediener somit ein leichtes Auffinden einzelner Arbeitsschritte der Werkstücksbearbeitung zu ermöglichen. Die hierarchische Struktur der Bearbeitungsobjekte hat ferner den Vorteil, dass sich die Zustände der Bearbeitungsobjekte bevorzugt gegenseitig beeinflussen. Wird zum Beispiel der Zustand eines speziellen Arbeitsschrittes auf den Zustand "Auszuführen" gesetzt, so setzt die Steuerungsvorrichtung auch den Zustand der übergeordneten Bearbeitungsobjekte, wie Bearbeitungsgruppe, des übergeordneten Werkstückes etc. auf denselben Zustand.

Dem Bediener wird somit direkt angezeigt, welches Werkstück noch weiter bearbeitet werden muss.

Der tatsächliche Bearbeitungsablauf, d.h. die Reihenfolge der abzuarbeitenden Bearbeitungsvorgänge, wird unter Berücksichtigung folgender Kriterien bestimmt: unter Vorgabe einer bestimmten Bearbeitungsstrategie, d.h. ob alle Trennschnitte auszuschneidender Ausfallstücke möglichst früh oder möglichst spät während der Gesamtbearbeitung stattfinden sollen, und/oder unter Vergabe bestimmter Prioritäten für einzelne Bearbeitungsobjekte, d.h. ob bestimmte Arbeitsschritte vor oder nach anderen Arbeitsschritten ausgeführt werden sollen. Insgesamt werden im Unterschied zu bekannten Steuerverfahren nicht mehr einzelne Bearbeitungsschritte isoliert betrachtet und in einer starren Befehlssequenz aneinandergefügt, sondern als Bearbeitungsobjekte beschrieben. Der Ablauf der Gesamtbearbeitung ist dabei völlig flexibel und kann jederzeit problemlos ohne langwierige Umprogrammierung des Quellprogrammes geändert werden. Die Steuerungsvorrichtung überwacht sämtliche Zustände der Bearbeitungsobjekte mit Rücksicht darauf, welche Auswirkung eine Zustandsänderung eines Bearbeitungsobjektes auf den Zustand der anderen Bearbeitungsobjekte hat.

Durch einfache Wahl einer bestimmten Bearbeitungsstrategie und durch die optische Darstellung der Zustände der einzelnen Bearbeitungsobjekte auf der Anzeige-einrichtung ist es dem Maschinenbediener möglich, eine individuelle Bearbeitungssequenz auf einfache Weise zu erstellen und unmittelbar an der Anzeigeeinrichtung zu überprüfen und ggf. zu ändern.

In analoger Weise werden im Bedarfsfall durch den Maschinenbediener "neue" Bearbeitungsobjekte der Werkzeugmaschine eingefügt und die bereits bestehende Objektstruktur damit ergänzt. Auf diese Weise kann ein neuartiges Bearbeitungsobjekt in die Objektstruktur der Maschinensteuerung aufgenommen und für zukunftige Bearbeitungen in der erfindungsgemässen Weise verwendet werden.

Im folgenden werden bevorzugte Ausführungen der Erfindung anhand der beigefügten Zeichnung beispielhaft beschrieben. Daraus ergeben sich weitere Vorteile der Erfindung. In der Zeichnung zeigen:
- Fig. 1: die Komponenten der Steuerungsvorrichtung einer Schneiderosionsmaschine;
- Fig. 2a: beispielhaft eine hierarchisch in unterschiedliche Bearbeitungsobjekte unterteilte Gesamtbearbeitung auf einer Schneiderosionsmaschine;
- Fig. 2b: beispielhaft jeweils eine Gruppe geeigneter Zustände für die in Fig. 1a gezeigten Bearbeitungsobjekte.

Nachfolgend wird die Erfindung anhand einer Schneiderosionsmaschine beschrieben. Dies bedeutet jedoch keinerlei Einschränkung der Erfindung, da der Bereich der Werkzeugmaschinentechnik einen breiten Anwendungsbereich hat.

Eine solche Schneiderosionsmaschine verfügt regelmässig über eine CNC-Steuerung, welche die zur Werkstücksbearbeitung notwendige, die Schnittkonturen bestimmende Relativbewegung zwischen Werkstück und Drahtelektrode steuert. Hierfur ist ein mit dem Maschinentisch gekoppelter, in X/Y-Hauptachsenrichtung bewegbarer X/Y-Antrieb vorgesehen, der die Steuersignale der CNC-Steuerung empfängt. Die CNC-Steuerung benötigt ein Steuerprogramm, das Steuerdaten, wie Lagedaten eines oder mehrerer auf dem Maschinentisch eingespannter Werkstücke, Verlaufs- bzw. Konturdaten der gewünschten Schnittkonturen, etc., enthält, welche sie in Stellsignale fur den Betrieb der X/Y-Antriebe umwandelt.

Ein Beispiel für eine hardwaremässige Implementierung der erfindungsgemässen Steuerungsvorrichtung zeigt Fig, 1. Eine Steuerungsvorrichtung 10 umfasst eine Speicherverwaltungseinrichtung 20, in welcher Gruppen von Bearbeitungsvorgängen einzelnen Bearbeitungsobjekten zusammen mit zugehörigen Bearbeitungszuständen zugeordnet und dauerhaft abspeichert sind. Sie umfasst ferner eine Überwachungseinrichtung 30, die den aktuellen Zustand bzw. Bearbeitungszustand jedes Bearbeitungsobjektes überwacht, und eine Zuordnungseinheit 40, die ggf. den Bearbeitungszustand eines Bearbeitungsobjektes selbständig ermittelt und diesem zuordnet. Die Steuerungsvorrichtung 10 verfügt über eine Anzeigeeinheit 50 und eine dazugehörige Eingabeeinheit 60 einer grafischen Benutzerschnittstelle. Im Falle der vorliegenden Schneiderosionsmaschine ist die Steuerungsvorrichtung 10 mit einer Dielektrikums-Aufbereitungseinheit 70, einem Impulsgenerator 80 sowie der Bearbeitungsvorrichtung 90 verbunden. Alle oben aufgeführten Einrichtungen 20, 30, 40, 50 und 60 können ggf. auch mehrfach vorhanden sein.

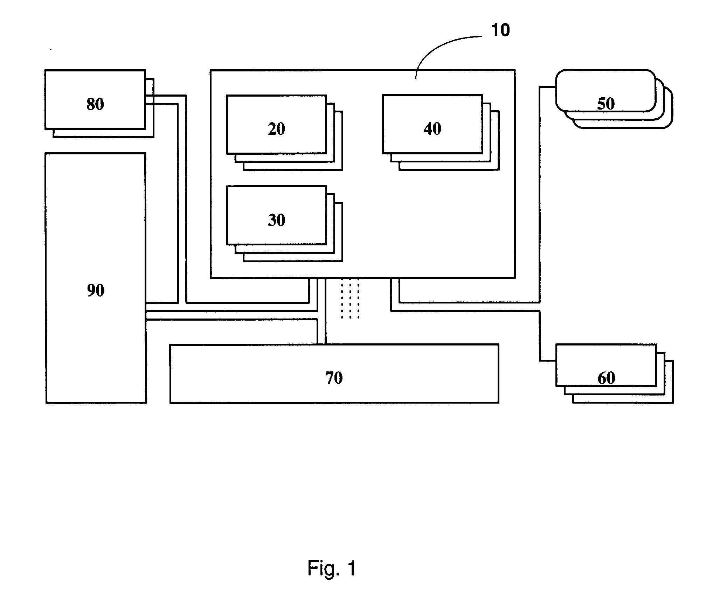

Die Dateiverwaltung der CNC-Steuerung ist in verschiedene, hierarchisch gestaffelte Verwaltungsebenen - nachfolgend als "Arbeitsebenen" bezeichnet - unterteilt. Jede Arbeitsebene der CNC-Steuerung umfasst ein oder mehrere Bearbeitungsobjekte an der Schneiderosionsmaschine. So verwaltet die in Fig. 1 gezeigte Speicherverwaltungseinrichtung 20 auszugsweise folgende Verwaltungsebenen: Maschinenebene, Ebene des Maschinentisches, einer Palette, einer Gruppe von Werkstücken, eines speziellen zu bearbeitenden Werkstücks, etc. Eine derartige flexible bearbeitenden Werkstücks, etc. Eine derartige flexible Objektstruktur ist bei einer Vielzahl von komplexen Einzelbearbeitungen bzw. Arbeitschritten sinnvoll. Die gruppierten Bearbeitungsobjekte können ggf. ihrerseits nach einer vorgegebenen hierarchischen Ordnung verwaltet werden, die je nach Bedarf vom Maschinenbediener selbst gestaltet werden kann.

Fig. 2a zeigt beispielhaft eine hierarchisch in unterschiedliche Bearbeitungsobjekte unterteilte Gesamtbearbeitung. Das in der Hierarchie ganz oben angeordnete Bearbeitungsobjekt ist eine Werkzeugmaschine "WZM". Der Werkzeugmaschine "WZM" sind ein Maschinentisch "TIS" und eine Werkzeuggruppe "WZG" mit untergeordneten Werkzeugen "WZ" untergeordnet. Diese Struktur eignet sich für jede hochautomatisierte Werkzeugmaschine, insbesondere für Schneiderosionsmaschienen mit einer automatisierten Werkzeug- und Werkstückbeschickung. Dem Maschinentisch "TIS" sind eine Palette "PAL" und ein Bezugspunkt "BPKT" für den Maschinentisch untergeordnet; der Palette "PAL" wiederum ein Bezugspunkt "BPKT" und zwei Werkstücke "WST". Dem in der Fig. 2a rechts dargestellten Werkstück "WST" ist eine Werkstücksgruppe "WSG" mit einem weiteren untergeordneten Werkstück "WST" übergeordnet. Hieraus wird ersichtlich, dass die Hierarchie nicht lediglich eine sich stets nach unten aufweisende Baumstruktur aufweisen muss, sondern dass auch Hierarchien mit nebengeordneten Ausgangsobjekten (ohne übergeordnetes Objekt) aufgestellt werden können (das Bearbeitungsobjekt Werkstücksgruppe "WSG" ist hier dem Bearbeitungsobjekt Palette "PAL" nebengeordnet). So kann eine Werkstücksgruppe "WSG" beispielsweise die Werkstücke verschiedener Paletten "PAL" umfassen. An diesem Beispiel wird deutlich, dass der Bediener eine beliebige Struktur an Verwaltungsebenen erstellen kann, die ihm bei der Optimierung des Programmieraufwandes für die Gesamtbearbeitung am zweckmässigsten erscheint.

Dem in der Fig. 2a links dargestellten Werkstück "WST" ist eine Bearbeitung "ARB" mit zwei untergeordneten Arbeitsschritten "AS" und eine Bearbeitungsgruppe "GRU" untergeordnet. Der Bearbeitungsgruppe "GRU" ist wiederum eine erste Bearbeitung "ARB" und eine zweite aus drei Arbeitsschritten "AS" bestehende Bearbeitung "ARB" untergeordnet.

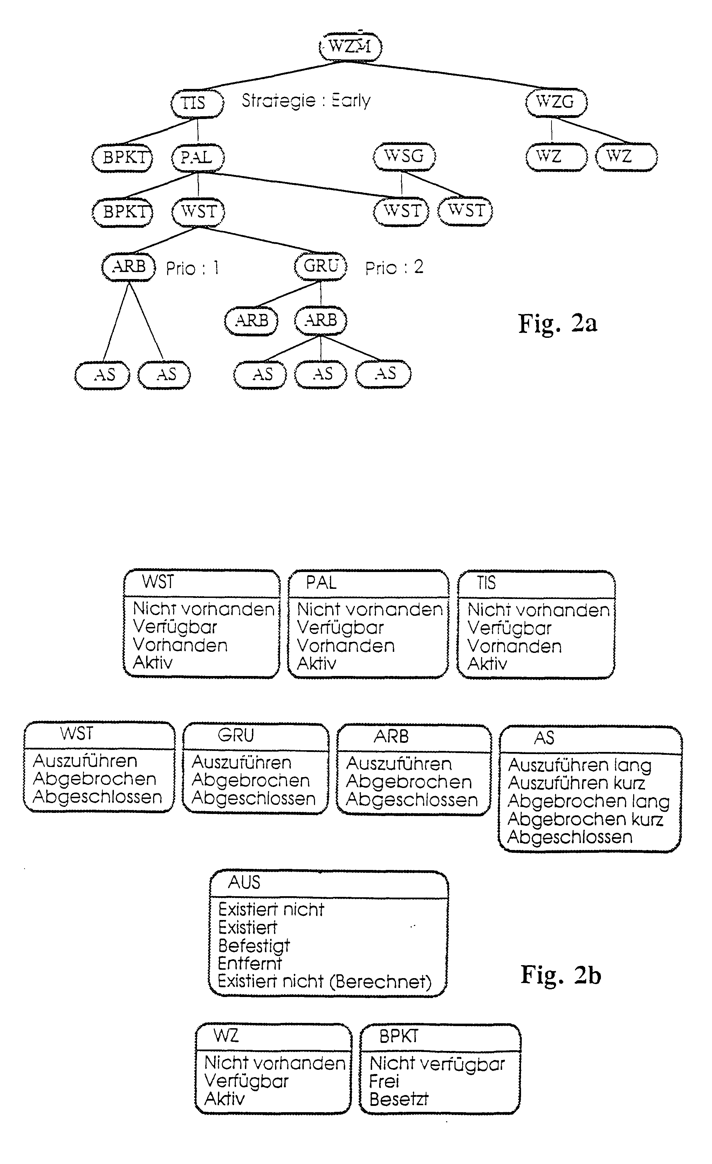

Fig. 2b zeigt beispielhaft jeweils eine Liste geeigneter Bearbeitungszustände für die einzelnen in Fig. 2a gezeigten Bearbeitungsobjekte. Die Bearbeitungsobjekte Werkzeugmaschine "WST", Palette "PAL" und Maschinentisch "TIS" können die Zustände "Nicht vorhanden", "Verfügbar" , "Vorhanden" und "Aktiv" annehmen, die Bearbeitungsobjekte Werkstück "WST", Werkstückgruppe "GRU" und Bearbeitung "ARB" die Zustände "Auszuführen", "Abgebrochen" und "Abgeschlossen". Ein einzelner Arbeitsschritt "AS" als Bearbeitungsobjekt kann die Zustände "Auszuführen lang", "Auszuführen kurz", "Abgebrochen lang", "Abgebrochen kurz" und "Abgeschlossen" annehmen (s.u.). Das Bearbeitungsobjekt Ausfallstück "AUS" (s.u.) die Zustände "Existiert nicht", "Existiert", "Befestigt", "Entfernt" und "Existiert nicht (Berechnet)". Die Bearbeitungsobjekte Werkzeuggruppe "WZG" und Werkzeug "WZ" können die Bearbeitungszustände "Nicht Vorhanden", "Verfügbar" und "Aktiv", das Bearbeitungsobjekt Bezugspunkt "BPKT" die Bearbeitungszustände "Nicht verfügbar", "Frei" und "Besetzt" annehmen.

Beim Einrichten der Schneiderosionsmaschine wählt der Bediener ein bestimmtes Bearbeitungsobjekt, z.B. die Arbeitsgruppe "GRU" aus. Die Zuordnungseinheit 40 durchsucht die Speicherverwaltungseinrichtung 20, sucht sodann nach den für die Arbeitsgruppe "GRU" geeigneten Bearbeitungszuständen und gibt diese in einem Fenster der Anzeigeeinrichtung 50 aus. Auf diese Weise ist die Liste geeigneter Zustände objektbezogen und strategieartbezogen (s.u.) auf die relevanten Zustände eingeschränkt. Der Maschinenbediener wählt nun aus dieser eingeschränkten Liste geeigneter Bearbeitungszustände einen bestimmten Bearbeitungszustand aus. Dieser kann unerwartet sein, z.B. der Bearbeitungszustand "Abgeschlossen", obwohl die der Bearbeitungsgruppe untergeordnete Bearbeitung sich noch im Zustand "Auszuführen" befindet. Der Bearbeitungszustand "Auszuführen" kann dabei von der Zuordnungseinrichtung 40 vorgewählt und auf der Anzeigeeinrichtung 50 entsprechend angezeigt werden (z.B. farblich hervorgehoben, etc.).

Wird die Bearbeitungsgruppe nun auf den Bearbeitungszustand "Auszuführen" gesetzt, so ordnet die Zuordnungseinrichtung 40 jedem hierarchisch übergeordneten Bearbeitungsobjekt entweder eine Auswahl an technisch sinnvollen Bearbeitungszuständen in Form einer Liste zu und zeigt diese in einem weiteren Fenster der Anzeigeeinheit 50 an oder weist den Bearbeitungsobjekten selbständig einen bestimmten Bearbeitungszustand zu und zeigt diesen bei Bedarf an. Im ersten Fall wählt der Maschinenbediener nun aus der Auswahl-Liste den gewünschten Bearbeitungszustand mit Hilfe der Eingabeeinheit 60 der grafischen Schnittstelle aus. Im zweiten Fall würde die Zuordnungseinrichtung 40 dem übergeordneten Werkstück "WST" ebenfalls den Bearbeitungszustand "Auszuführen" zuweisen.

Je nach Bedarf und Komplexität der Gesamtbearbeitung können einzelne Bearbeitungsobjekte "übersprungen" werden. Dies ist immer dann sinnvoll, wenn die Bearbeitungsverhältnisse auf verschiedenen Verwaltungsebenen der Funkenerosionsmaschine exakt dieselben sind und damit auch etwaige Zuordnungen von Bearbeitungszuständen für die entsprechenden Bearbeitungsobjekte nicht differenziert zu werden brauchen.

Die hier vorgeschlagene hierarchische Struktur ist ausgesprochen nützlich, um einerseits ein rasches und effizientes Einrichten einer Funkenerosionsmaschine und andererseits eine genauso effiziente Verwaltung der in der Steuerungsvorrichtung 10 abgelegten Bearbeitungsobjekte mit zugehörigen Bearbeitungszuständen zu gewährleisten. Auf diese Weise wird das dem Stand der Technik entsprechende sequentielle Steuerprogramm zur Festlegung der einzelnen Bearbeitungsvorgänge aufgelöst.

Die Gesamtbearbeitung kann jederzeit gestartet werden, wenn das aktuell zu bearbeitende Bearbeitungsobjekt eindeutig und vollständig beschrieben ist. Es ist dabei nicht notwendig, das in der Hierarchie am höchsten angeordnete Bearbeitungsobjekt vollständig zu beschreiben. Die Gesamtbearbeitung kann vielmehr für jedes in der Hierarchie untergeordnete Bearbeitungsobjekt bei dessen vollständiger Beschreibung gestartet werden.

Tritt während der Gesamtbearbeitung bei einem bestimmten Arbeitsschritt "AS" beispielsweise ein Drahtriss wiederholt auf, so wird der Bearbeitungszustand dieses Arbeitsschrittes "AS" auf "Abgebrochen" gesetzt und zum nächsten Arbeitsschritt "AS" o.ä. gesprungen. Die Steuerungsvorrichtung 10 führt dann die nächsten Arbeitsschritte "AS" aus oder stoppt die Gesamtbearbeitung, falls alle Bearbeitungsobjekte sich im Zustand "Abgeschlossen" oder "Abgebrochen" befinden. Befinden sich beispielsweise alle Bearbeitungsobjekte eines Werkstückes "WST" in den Zuständen "Abgeschlossen", dann wird auch der Zustand des Werkstückes auf den Zustand "Abgeschlossen" gesetzt. Befindet sich allerdings ein Arbeitsschritt "AS" im Zustand "Abgebrochen", so wird der Zustand des Werkstückes "WST" ebenfalls in den Zustand "Abgebrochen" gesetzt. Der Bediener erkennt anschliessend, welche Werkstücke "WST" fertig bearbeitet wurden und bei welchen noch eine Nachbearbeitung notwendig ist. Hierzu sichtet er hierarchisch die Zustände aller Bearbeitungen und sucht die Bearbeitungen heraus, die zu dem Problem geführt haben. Für diese Bearbeitungen kann er anschliessend beispielsweise die Technologieparameter o.ä. ändern und ihren Zustand anschliessend manuell von "Abgebrochen" auf "Auszuführen" oder ggf. sogar auf "Abgeschlossen" setzen, falls die Bearbeitung technisch nicht möglich ist oder einfach nicht mehr erwünscht wird. Die Steuerungsvorrichtung 10 ändert anschliessend die Zustände aller in der Hierarchie übergeordneten Bearbeitungsobjekte ebenfalls vom Zustand "Abgebrochen" auf den Zustand "Auszuführen". Startet der Bediener anschliessend erneut eine Gesamtbearbeitung, so führt die Steuerungsvorrichtung 10 lediglich diejenigen Bearbeitungen aus, die noch nicht durchgeführt wurden.

Der Bediener kann auch jederzeit während der Bearbeitung den Zustand einzelner Bearbeitungsobjekte ändern, beispielsweise auf den Zustand "Abgeschlossen" setzen, wenn diese Bearbeitung nicht mehr gewünscht wird, oder umgekehrt, wenn durch wiederholtes Ausführen dieser Bearbeitung beispielsweise die Qualität verbessert werden kann. Diese Änderungen kann der Bediener jederzeit auch wieder rückgängig machen, wobei die Steuerungsvorrichtung 10 automatisch die Zustände aller übergeordneten Bearbeitungsobjekte entsprechend ändert. Ist die Gesamtbearbeitung abgeschlossen, kann der Bediener nun dank der Anzeigeeinrichtung 50 einfach erkennen, welche Arbeitsschritte "AS" o.ä. noch nicht ausgeführt wurden.

Bei allen Eingriffen muss nicht das gesamte Programm umgeschrieben werden, d.h. es wird weder das ursprüngliche Programm geändert noch ein neues Programm neu erstellt.

Auf Schneiderosionsmaschinen werden häufig Stempel oder Matrizen ausgeschnitten, so dass sog. Ausfallstücke entstehen. Diese Ausfallstücke müssen zu einem bestimmten Zeitpunkt am Werkstück befestigt werden. Hierzu wird der Bearbeitungszustand eines Arbeitsschrittes "AS" beispielsweise für das Ausschneiden der Kontur eines Stempels bzw. einer Matrize in einen langen Schnitt (Vollschnitt) und einen kurzen Schnitt (Trennschnitt) aufgeteilt. Beim langen Schnitt wird die Kontur nur soweit ausgeschnitten, dass ein kleiner Steg das Werkstück mit dem auszuschneidenden Stempel bzw. Ausfallstück verbindet. Nach dem langen Schnitt wird das Ausfallstück fixiert. Danach erfolgt der kurze Schnitt, bei dem der verbliebene Steg getrennt wird. Anschliessend wird das dabei entstandene Ausfallstück entfernt.
Die Ausfallstücke müssen in der Regel während der Bearbeitung vom Werkstück entfernt werden, damit beispielsweise Nachschnitte o.ä. entlang der langen Schnittbahn ausgeführt werden können, wobei etwaige Befestigungsmittel ein Hindernis darstellen können. So wird auch das Ausfallstück als Bearbeitungsobjekt mit verschieden möglichen Bearbeitungszuständen behandelt (vgl. Fig. 2b). Befindet sich der Bearbeitungszustand eines Ausfallstückes auf "Existiert nicht (Berechnet)", so hat die Steuerungsvorrichtung 10 selbständig aufgrund der eingegebenen Schnittdaten der zu schneidenden Kontur errechnet, dass unter diesen Umständen kein Ausfallstück entstehen kann. Dies soll nachfolgend anhand eines Beispieles näher erläutert werden:

Auf einem Werkstück soll eine aus einem Arbeitsschritt "AS" bestehende Bearbeitung "ARB" ausgeführt werden, wobei ein Ausfallstück ausgeschnitten wird. Die Steuerungsvorrichtung 10 erkennt dabei automatisch (kann auch vom Benutzer manuell eingegeben werden) anhand des durchzuführenden Schnittes, dass ein Ausfallstück entsteht und setzt den Zustand des Ausfallstückes auf "Existiert" und den des Arbeitsschrittes "AS" auf "Auszuführen lang". Dann führt die Steuerungsvorrichtung 10 den langen Schnitt aus und ändert den Zustand des Arbeitsschrittes "AS" auf "Abgeschlossen lang". Danach stoppt die Steuerungsvorrichtung 10 und fordert den Bediener zur Befestigung des Ausfallstückes auf. Ist das Ausfallstück befestigt, ändert der Bediener manuell den Zustand des Ausfallstückes von "Existiert" auf "Befestigt". Anschliessend veranlasst der Bediener die Steuerungsvorrichtung 10 zum Fortfahren der Bearbeitung. Die Steuerungsvorrichtung 10 bietet dem Bediener sodann den Zustand "Auszuführen kurz" für diesen Arbeitsschritt "AS" an. Wählt der Bediener diesen Zustand auch aus und startet die Gesamtbearbeitung erneut, so führt die Steuerungsvorrichtung 10 den kurzen Schnitt aus und setzt den Zustand des Arbeitsschrittes "AS" auf "Abgeschlossen kurz". Anschliessend stoppt die Steuerungsvorrichtung die Bearbeitung wiederum und fordert den Bediener zum Entfernen des Ausfallstückes auf. Ist das Ausfallstück entfernt, ändert der Bediener manuell den Zustand des Ausfallstückes von "Befestigt" auf "Entfernt". Hieran können sich analog ggf. Arbeitsschritte "AS" in Form von Nachschnitten anschliessen. Stellt die Steuerungsvorrichtung 10 zu Beginn der Bearbeitung fest, dass kein Ausfallstück entsteht, so setzt sie den Zustand des vermeintlichen Ausfallsstückes auf "Existiert nicht (Berechnet)". Dies kann der Bediener auch manuell eingeben.

In Werkzeugmaschinen, wie Schneiderosionsmaschinen mit einer automatischen Ausfallstückfixierung und/oder - entfernung können die oben erwähnten manuellen Tätigkeiten zumindest teilweise auch automatisch erfolgen. Die Steuerungsvorrichtung 10 bekommt dabei die jeweilige Zustandsänderung des Ausfallstückes von der Einrichtung zur automatischen Ausfallstückfixierung und/oder -entfernung mitgeteilt.

Bei jedem Eingriff des Bedieners ist es äusserst wichtig, dass die manuell eingegebene Zustandsänderung auch dem wirklichen Zustand entspricht. So darf beispielsweise der Zustand eines Ausfallstückes nicht auf den Zustand "Entfernt" gesetzt werden, wenn das bei der Bearbeitung entstandene Ausfallstück noch nicht entfernt wurde. Daher enthält die Steuerungsvorrichtung 10 gewisse Regeln, anhand derer sie vom Bediener herbeigerufene Zustandsänderung auf ihre Richtigkeit überprüfen kann. Stellt die Steuerungsvorrichtung 10 beispielsweise fest, dass eine nicht zulässige Zustandsänderung angefordert wird, kann sie den Bediener darauf hinweisen und die Gesamtbearbeitung stoppen. Die Steuerungsvorrichtung 10 kann aber andererseits ihre Liste an geeigneten Bearbeitungszuständen für ein Bearbeitungsobjekt jeweils nach diesen Regeln so modifizieren, dass der Bediener überhaupt keine unzulässige Zustandsänderung anfordern kann. So kann er beispielsweise immer nur aus einer bestimmten Liste an Zuständen für ein Bearbeitungsobjekt auswählen, die von der Steuerungsvorrichtung 10 unter Berücksichtigung aller Regeln erstellt wurde.

Nachfolgend soll anhand einiger Beispiele erläutert werden, welche Zustandsänderungen während der Bearbeitung möglich sind, welche Auswirkungen sie nach sich ziehen und welche Bedingungen dabei erfüllt sein müssen:

Für die Bearbeitungsobjekte Werkstück "WST", Bearbeitungsgruppe "GRU" und Bearbeitung "ARB" kann der Bediener den Zustand von "Auszuführen" auf "Abgeschlossen" ändern. Dabei ändert die Zuordnungseinrichtung 40 den Zustand jedes untergeordneten Bearbeitungsobjektes ebenfalls auf den Zustand "Abgeschlossen" oder "Entfernt" für ein Ausfallstück (ggf. werden die Zustände auch nicht geändert, so dass der Bediener weiterhin erkennen kann, welche Bearbeitungen noch nicht ausgeführt wurden). Die Zuordnungseinrichtung 40 ändert auch den Zustand der übergeordneten Bearbeitungsobjekte auf den Zustand "Abgeschlossen", falls alle nebengeordneten Bearbeitungsobjekte ebenfalls im Zustand "Abgeschlossen" sind. Dies setzt sich in der Hierarchie der Bearbeitungsobjekte bis zum obersten Objekt fort. Analog ändert die Zuordnungseinrichtung 40 auch alle Zustände der unter- und übergeordneten Bearbeitungsobjekte, wenn der Bediener den Zustand eines Werkstückes "WST", einer Bearbeitungsgruppe "GRU" oder einer Bearbeitung "ARB" von "Abgeschlossen" auf "Auszuführen" ändert.

Ändert der Bediener den Zustand eines Arbeitsschrittes "AS" von "Auszuführen lang" auf "Auszuführen kurz", so muss der Zustand des zugehörigen Ausfallstückes entweder im Zustand "Existiert" oder "Entfernt" sein, der Arbeitsschritt "AS" muss ein Vollschnitt, ein Nachschnitt einer Matrize mit vorangegangenem Arbeitsschritt "AS", dessen Zustand "Auszuführen lang" oder "Abgebrochen lang" ist, oder ein Nachschnitt eines Stempels mit vorangegangenem Arbeitsschritt "AS" sein, dessen Zustand "Auszuführen kurz" ist. Andernfalls ist diese Zustandsänderung nicht möglich. Die Zustandsänderungen hat aber keine Auswirkung auf andere Bearbeitungsobjekte.

Ändert der Bediener den Zustand eines Arbeitsschrittes "AS" von "Auszuführen lang" auf "Abgeschlossen", so darf der Arbeitsschritt "AS" nicht das Ausschneiden eines Stempels betreffen, der Arbeitsschritt "AS" muss ein Vollschnitt einer Matrize mit einem Ausfallstück, dessen Zustand "Existiert nicht" oder "Existiert nicht (Berechnet)" ist, oder ein Nachschnitt einer Matrize mit vorangegangenem Arbeitsschritt "AS", dessen Zustand "Abgeschlossen" ist, und mit einem Ausfallstück sein, dessen Zustand nicht "Existiert" oder "Befestigt" ist. Andernfalls ist diese Zustandsänderung nicht möglich. Die Zustandsänderung wirkt sich auf die übergeordneten Bearbeitungsobjekte aus, falls sie den letzten abgeschlossenen Arbeitsschritt dieser Verwaltungsebene betrifft.

Der Ablauf der Gesamtbearbeitung ergibt sich unter Berücksichtigung folgender Kriterien: des Zustandes der einzelnen Bearbeitungen, ausgewählter Bearbeitungsstrategien, programmierter Aktionen, zugewiesener Prioritäten und ev. weiterer Parameter. Dies ist in der Fig. 2a durch die Bearbeitungsstrategie "Early" für den Maschinentisch "TIS" und die Prioritätsvergaben "Prio: 1" für die Bearbeitung "ARB" und "Prio: 2" für die Arbeitsgruppe "GRU" angedeutet.

Weiterhin kann zwischen Bearbeitungsstrategien für einzelne Verwaltungsebenen unterschieden werden, beispielsweise für ein Werkstück "WST" und für eine Werkstückgruppe "WSG". Die einzelnen Strategien sind somit ebenso wie die Bearbeitungsobjekte hierarchisch angeordnet und können sich damit auch gegenseitig beeinflussen. Die Strategie für eine Werkstückgruppe "WSG" ist der Strategie für ein Werkzeug "WST" übergeordnet, so dass bei der Bearbeitung dieses Werkstückes "WST" die Strategie für das Werkstück "WST" und darüberhinaus die Strategie für die übergeordnete Werkstückgruppe "WSG" berücksichtigt wird (ausser es sei in der Strategie der Werkzeuggruppe vorgesehen, dass jedes Werkstück lediglich nach seiner eigenen Strategie ausgeführt werden soll).

Nachfolgend sollen am Beispiel einer Schneiderosionsmaschine einige Bearbeitungsstrategien für Werkstücke "WST" erläutert werden, nämlich die Bearbeitungsstrategien "Early", "Late", "Werkstück", "Arbeitsschritt" und "Early Werkstück" bzw. "Late Werkstück":

Bei der Bearbeitungsstrategie "Early" wird versucht, alle Trennschnitte auf einen während der Gesamtbearbeitung frühest möglichen Zeitpunkt zu konzentrieren, zu dem der Bediener alle Massnahmen (Befestigen oder Entfernen des Ausfallstückes) vornehmen kann. Der Ablauf einer Gesamtbearbeitung kann somit folgendermassen aussehen:
erst alle langen Schnitte für Matrizen und Stempel,
   - dann Befestigen der Ausfallstücke,
   - dann alle Trennschnitte,
   - dann Entfernen der Aufallstücke,
   - dann alle Nachschnitte und übrigen Schnitte ohne Ausfallstücke.

Bei der Bearbeitungsstrategie "Late" werden die einzelnen Schnitte so zeitlich angeordnet, dass der Bediener möglichst spät alle manuellen Operationen vornehmen muss. Der Ablauf einer Gesamtbearbeitung kann somit folgendermassen aussehen:
- erst alle Voll- und Nachschnitte von Matrizen ohne Ausfallstücke,
- dann alle Voll- und Nachschnitte von Matrizen und Stempeln mit Ausfallstücken,
- dann Befestigen der Ausfallstücke,
- dann alle Trennschnitte,
- dann Entfernen aller Ausfallstücke,
- schliesslich alle Nachschnitte.

Bei der Bearbeitungsstrategie "Werkstück" wird der Bearbeitungsablauf durch die den einzelnen Bearbeitungsobjekten vergebenen Prioritäten bestimmt, wobei erst das Werkstück "WST" mit der höchsten Priorität, dessen Bearbeitungsgruppe "GRU" mit der höchsten Priorität und dessen Bearbeitung "ARB" mit der höchsten Priorität ausgeführt wird. Ist die Bearbeitungsstrategie für das Werkstück "WST" nicht explizit mit einer Bearbeitungsstrategie für die einzelne Bearbeitung "ARB" verknüpft, so kann die Steuerungsvorrichtung 10 der Bearbeitung "ARB" intern eine bevorzugte Strategie vergeben, beispielsweise die Strategie "Early". Haben zwei Bearbeitungen "ARB" die gleiche Priorität, so werden sie auch gleichzeitig ausgeführt.

Bei der Bearbeitungsstrategie "Arbeitsschritt" wird ein sogenannter Bearbeitungssequenz-Generator angewendet. Dabei werden die Prioritäten für die einzelnen langen und kurzen Schnitte eines Arbeitsschrittes "AS" automatisch oder seitens des Bedieners ermittelt und eingegeben. Anschliessend wird der Arbeitsschritt "AS" mit der höchsten Priorität ausgeführt.

Bei der Bearbeitungsstrategie "Early Werkstück" bzw. "Late Werkstück" wird die Bearbeitung des Werkstückes mit der Bearbeitungsstrategie "Early" bzw. "Late" ausgeführt. Die verbleibenden, nicht unter das Werkstück untergeordneten Arbeitsschritte werden dann in der Reihenfolge der ihnen zugeteilten Prioritäten bearbeitet. Wenn z.B. ein Werkstück mit der Strategie "Early" bearbeitet wurde und danach noch zwei Arbeitsschritte "AS" mit unterschiedlicher Priorität verbleiben, dann wird zuerst der Arbeitsschritt "AS" mit der höheren Priorität bearbeitet.

Für Werkstücksgruppen "WSG" gibt es zusätzlich zu den vorgenannten Bearbeitungsstrategien für Werkstücke "WST" noch die Strategien "Werkstück" und "Alle Werkstücke":

Bei der Strategie "Werkstück" wird zuerst das Werkstück "WST" mit der höchsten Priorität bearbeitet, und zwar mit der Bearbeitungsstrategie für dieses Werkstück "WST". Wenn die gesamte Bearbeitung dieses Werkstückes "WST" abgeschlossen ist (samt Ausfallstückbefestigung und - entfernung), wird das nächste Werkstück "WST" bearbeitet.

Bei der Strategie "Alle Werkstücke" wird erst das Werkstück "WST" mit der höchsten Priorität bearbeitet, und zwar mit der Bearbeitungsstrategie für dieses Werkstück "WST". An dem Punkt der Bearbeitung, an dem der Bediener für die Bearbeitung dieses Werkstückes eingreifen müsste (Ausfallstücke, etc.), wird die Gesamtbearbeitung allerdings nicht unterbrochen, sondern das nächste Werkstück "WST" nach Prioritätenvorgabe bearbeitet. Dies wird für alle Werkstücke der Werkstückgruppe durchgeführt, bis ohne Eingriff des Bedieners nichts mehr bearbeitet werden kann.

## Patentansprüche

1. Verfahren zur Steuerung einer Vielzahl von Bearbeitungsvorgängen auf einer Werkzeugmaschine, insbesondere einer Funkenerosionsmaschine, bei welchem:
a) Gruppen von Bearbeitungsvorgängen jeweils einem oder mehreren Bearbeitungsobjekten, z.B. der Funkenerosionsmaschine ("WZM") als solcher, einem Werkzeugtisch ("TIS"), einer Palette ("PAL") und/oder einer Werkstückgruppe ("WSG"), einem Werkstück ("WST"), einer Bearbeitungsgruppe ("GRU"), einer Bearbeitung ("ARB"), einem Arbeitsschritt ("AS"), einem Ausfallstück ("AUS"), einer Werkzeuggruppe ("WZG"), einem Werkzeug ("WZ") und/oder einem Bezugspunkt ("BPKT"), zugeordnet werden;
b) die Bearbeitungsobjekte durch jeweils einen Zustand aus je einer Gruppe möglicher Bearbeitungszustände beschrieben werden;
**dadurch gekennzeichnet, daß**
c) der Bearbeitungsablauf durch die Auswahl der Zustände von Bearbeitungsobjekten aus der jeweils zugehörigen Gruppe möglicher Bearbeitungszustände festgelegt wird und/oder während der Bearbeitung veränderbar ist, wobei die aktuellen Zustände der einzelnen Bearbeitungsobjekte ständig überwacht und bei Bedarf angezeigt werden; und
d) bei der Auswahl und/oder Änderung eines Zustandes eines Bearbeitungsobjektes die Verträglichkeit mit Zuständen anderer Bearbeitungsobjekte überprüft wird, und die Zustände anderer Bearbeitungsobjekte an diese Auswahl oder Änderung bei Bedarf angepaßt werden.

2. Verfahren nach Anspruch 1, **dadurch gekennzeichnet, dass** der Zustand eines Bearbeitungsobjekts aus einer Vorauswahl geeigneter Zustände vor, während und/oder nach der Bearbeitung manuell oder automatisch ausgewählt und dem Bearbeitungsobjekt zugeordnet wird.

3. Verfahren nach Anspruch 1 oder 2, **dadurch gekennzeichnet, dass** die Bearbeitungsobjekte hierarchisch unterteilt werden.

4. Verfahren nach Anspruch 3, **dadurch gekennzeichnet, dass** der Zustand eines Bearbeitungsobjektes von dem Zustand eines hierarchisch untergeordneten und/oder übergeordneten Bearbeitungsobjektes beeinflusst wird.

5. Verfahren nach einem der vorstehenden Ansprüche, **dadurch gekennzeichnet, dass** der Bearbeitungsablauf unter Berücksichtigung folgender Kriterien ausgeführt wird:
- Vorgabe einer bestimmten Bearbeitungsstrategie,
- Vorgabe von Prioritäten für einzelne Bearbeitungsobjekte,
- dem Bearbeitungszustand einzelner Bearbeitungsobjekte und/oder
- vorgegebener Ablaufsequenzen.

6. Verfahren nach einem der vorstehenden Ansprüche, **dadurch gekennzeichnet, dass** die Gruppe an geeigneten Zuständen für ein Bearbeitungsobjekt eine offene, d.h. beliebig ergänzbare, Liste ist.

7. Verfahren nach Anspruch 5 oder 6, **dadurch gekennzeichnet, dass** bei Auswahl eines bestimmten Bearbeitungsobjektes eine unter Berücksichtigung der in Anspruch 5 aufgeführten Kriterien geordnete Gruppe geeigneter Zustände zumindest ausschnittsweise angezeigt wird.

8. Verfahren nach einem der vorstehenden Ansprüche zur Steuerung einer Funkenerosionsmaschine, **dadurch gekennzeichnet, dass** die Funkenerosionsmaschine in folgende Bearbeitungsobjekte hierarchisch unterteilt wird:
- die Funkenerosionsmaschine ("WZM") als solche,
- einen Maschinentisch ("TIS"),
- eine Palette ("PAL") und/oder eine Werkstückgruppe ("WSG"),
- ein Werkstück ("WST"), eine Bearbeitungsgruppe ("GRU"),
- eine Bearbeitung ("ARB"),
- einen Arbeitsschritt ("AS"),
- ein Ausfallstück ("AUS"),
- eine Werkzeuggruppe ("WZG"),
- ein Werkzeug ("WZ"), und/oder,
- einen Bezugspunkt ("BPKT").

9. Vorrichtung zur Steuerung von Werkzeugmaschinen, insbesondere Funkenerosionsmaschinen, mit:
a) einer Speicherverwaltungseinrichtung (20) zum Verwalten einer Vielzahl von Bearbeitungsvorgängen, in welcher Gruppen von Bearbeitungsvorgängen jeweils einem oder mehreren Bearbeitungsobjekten, z.B. der Funkenerosionsmaschine ("WZM") als solcher, einnem Werkzeugtisch ("TIS"), einer Palette ("PAL") und/oder einer Werkstückgruppe ("WSG"), einem Werkstück ("WST"), einer Bearbeitungs-gruppe ("GRU"), einer Bearbeitung ("ARB"), einem Arbeitsschritt ("AS"), einem Ausfallstück ("AUS"), einer Werkzeuggruppe ("WZG"), einem Werkzeug ("WZ") und/oder einem Bezugspunkt ("BPKT"), zugeordnet sind und die Bearbeitungsobjekte durch jeweils einen Zustand aus je einer Gruppe möglicher Bearbeitungszustände beschrieben werden;
**gekennzeichnet durch**
b) eine Eingabeeinrichtung (60) zur Auswahl der Zustände von Bearbeitungsobjekten aus der jeweils zugehörigen Gruppe möglicher Bearbeitungszustände und/oder zur Änderung der Zustände von Bearbeitungsobjekten während der Bearbeitung;
c) eine Überwachungseinrichtung (30) zum Überwachen der aktuellen Zustände der Bearbeitungsobjekte; und
d) eine Zuordnungseinrichtung (40) zur Überprüfung der Verträglichkeit dieser Auswahl und/oder Änderung mit den Zuständen anderer Bearbeitungsobjekte und bei Bedarf zur Anpassung der Zustände anderer Bearbeitungsobjekte an diese Auswahl oder Änderung der Zustände.

10. Steuerungsvorrichtung nach Anspruch 9, **gekennzeichnet durch** eine Zuordnungseinrichtung (40) zum automatischen Zuordnen eines Zustandes an ein Bearbeitungsobjekt unter Berücksichtigung der Zustände unter- und/oder übergeordneter Bearbeitungsobjekte.

11. Steuerungsvorrichtung nach Anspruch 9 oder 10, **gekennzeichnet durch** eine Eingabeeinrichtung (60) zum Eingeben von Zuständen einzelner Bearbeitungsobjekte vor, während und/oder nach der Bearbeitung.

12. Vorrichtung nach Anspruch 11, **dadurch gekennzeichnet, dass** die aus der Eingabeeinrichtung (60) und der Anzeigeeinrichtung (50) bestehende Benutzerschnittstelle eine graphische Schnittstelle ist und die Anzeigeeinrichtung (50) zur wenigstens ausschnittweisen Darstellung einer Gruppe geeigneter Zustände eines Bearbeitungsobjektes ausgelegt ist.

## Claims

1. Method for the control of a large number of machining processes on a machine tool, in particular on a spark erosion machine, in which:
a) groups of machining processes are each assigned to one or more machining objects, e.g. to the spark erosion machine ("WZM") as such, to a tool table ("TIS"), to a pallet ("PAL") and/or to a group of workpieces ("WSG"), to a workpiece ("WST"), to a machining group ("GRU"), to a machining process ("ARB"), to an operation ("AS"), to a scrap piece ("AUS"), to a group of tools ("WZG"), to a tool ("WZ") and/or to a reference point ("BPKT");
b) the machining objects are described each time by a state each taken from a group of possible machining states;
**characterised in that**
c) the machining process is defined by the selection of the states of machining objects from the appropriately associated group of possible machining states and/or can be changed during the machining process, the current states of the individual machining objects being continuously monitored and displayed as required; and
d) when selecting and/or changing a state of a machining object, the compatibility with states of other machining objects is checked and the states of other machining objects are matched to this selection or change as required.

2. Method according to Claim 1, **characterised in that** the state of a machining object is manually or automatically selected from a pre-selection of suitable states before, during and/or after the machining process and assigned to the machining object.

3. Method according to Claim 1 or 2, **characterised in that** the machining objects are sub-divided hierarchically.

4. Method according to Claim 3, **characterised in that** the state of a machining object is affected by the state of a hierarchically subordinate and/or superior machining object.

5. Method according to one of the preceding claims, **characterised in that** the machining process is carried out taking into account the following criteria:
- specification of a particular machining strategy,
- specification of priorities for individual machining objects,
- the machining state of individual machining objects and/or
- specified process sequences.

6. Method according to one of the preceding claims, **characterised in that** the group of suitable states for a machining object is a list that is open, i.e. can be added to at will.

7. Method according to Claim 5 or 6, **characterised in that** when selecting a particular machining object, a group of suitable states, ordered by taking into account the criteria listed in Claim 5, is displayed at least in part.

8. Method according to one of the preceding claims for controlling a spark erosion machine, **characterised in that** the spark erosion machine is hierarchically sub-divided into the following machining objects:
- the spark erosion machine ("WZM") as such,
- a machine table ("TIS"),
- a pallet ("PAL") and/or a group of workpieces ("WSG"),
- a workpiece ("WST"), a machining group ("GRU"),
- a machining process ("ARB"),
- an operation ("AS"),
- a scrap piece ("AUS"),
- a group of tools ("WZG"),
- a tool ("WZ") and/or
- a reference point ("BPKT").

9. Device for the control of machine tools, in particular of spark erosion machines, with:
a) a memory management unit (20) for managing a large number of machining processes, in which groups of machining processes are each assigned to one or more machining objects, e.g. to the spark erosion machine ("WZM") as such, to a tool table ("TIS"), to a pallet ("PAL") and/or to a group of workpieces ("WSG"), to a workpiece ("WST"), to a machining group ("GRU"), to a machining process ("ARB"), to an operation ("AS"), to a scrap piece ("AUS"), to a group of tools ("WZG"), to a tool ("WZ") and/or to a reference point ("BPKT") and the machining objects are described each time by a state each taken from a group of possible machining states;
**characterised by**
b) an input unit (60) for selecting the states of machining objects from the appropriately associated group of possible machining states and/or for changing the states of machining objects during the machining process;
c) a monitoring unit (30) for monitoring the current states of the machining objects; and
d) an assignment unit (40) for checking the compatibility of this selection and/or change with the states of other machining objects and for matching the states of other machining objects to this selection or change of states as required.

10. Control device according to Claim 9, **characterised by** an assignment unit (40) for automatically assigning a state to a machining object taking into account the states of subordinate and/or superior machining objects.

11. Control device according to Claim 9 or 10, **characterised by** an input unit (60) for entering states of individual machining objects before, during and/or after the machining process.

12. Device according to Claim 11, **characterised in that** the user interface consisting of the input unit (60) and the display unit (50) is a graphical interface and the display unit (50) is designed for displaying a group of suitable states of a machining object at least in part.

## Revendications

1. Procédé de commande d'une pluralité de processus d'usinage sur une machine à usiner, en particulier une machine à usiner par électro-érosion, dans lequel :
a) des groupes de processus d'usinage sont associés à chaque fois un ou plusieurs objets de l'usinage, par exemple la machine à usiner par électro-érosion (« WZM ») en tant que telle, une table à outils (« TIS »), une palette (« PAL ») et/ou un groupe de pièces à usiner (« WSG »), une pièce à usiner (« WST »), un groupe d'usinages (« GRU »), un usinage (« ARB »), une étape de travail (« AS »), un morceau à enlever (« AUS »), un groupe d'outils (« WZG »), un outil (« WZ ») et/ou un point de référence (« BPKT ») ;
b) les objets de l'usinage sont décrits par, chaque fois, un état pris dans, chaque fois, un groupe d'états de l'usinage possibles ;
**caractérisé par** le fait
c) que le déroulement de l'usinage est déterminé par la sélection des états d'objets de l'usinage pris dans le groupe, respectivement associé, d'états de l'usinage possibles et/ou peut être modifié pendant l'usinage, les états actuels des différents objets de l'usinage étant surveillés en permanence et affichés au besoin ; et
d) lors de la sélection et/ou de la modification d'un état d'un objet de l'usinage, la compatibilité avec des états d'autres objets de l'usinage est vérifiée et les états d'autres objets de l'usinage sont, au besoin, adaptés à cette sélection ou à cette modification.

2. Procédé selon la revendication 1, **caractérisé par le fait que** l'état d'un objet de l'usinage est sélectionné, manuellement ou automatiquement, avant, pendant et/ou après l'usinage, dans une présélection d'états appropriés et associé à l'objet de l'usinage.

3. Procédé selon la revendication 1 ou 2, **caractérisé par le fait que** les objets de l'usinage sont hiérarchiquement subdivisés.

4. Procédé selon la revendication 3, **caractérisé par le fait que** l'état d'un objet de l'usinage est influencé par l'état d'un objet de l'usinage d'un rang hiérarchiquement inférieur et/ou supérieur.

5. Procédé selon l'une des revendications précédentes, **caractérisé par le fait que** le déroulement de l'usinage s'effectue en tenant compte des critères suivants :
- prescription d'une stratégie déterminée de l'usinage,
- prescription de priorités pour différents objets de l'usinage,
- état d'usinage des différents objets de l'usinage et/ou
- séquences de déroulement prescrites.

6. Procédé selon l'une des revendications précédentes, **caractérisé par le fait que** le groupe concernant les états appropriés pour un objet de l'usinage est une liste ouverte, c'est-à-dire pouvant être complétée à volonté.

7. Procédé selon la revendication 5 ou 6, **caractérisé par le fait que** lors de la sélection d'un objet de l'usinage déterminé un groupe d'états appropriés, associé en tenant compte des critères énumérés dans la revendication 5, est affiché au moins par extrait.

8. Procédé selon l'une des revendications précédentes pour la commande d'une machine d'usinage par électro-érosion, **caractérisé par le fait que** la machine d'usinage par électro-érosion est hiérarchiquement subdivisée en les objets de l'usinage suivants :
- la machine à usiner par électro-érosion (« WZM ») en tant que telle,
- une table de machine (« TIS »),
- une palette (« PAL ») et/ou un groupe de pièces à usiner (« WSG »),
- une pièce à usiner (« WST »), un groupe d'usinages (« GRU »),
- un usinage (« ARB »),
- une étape de travail (« AS »),
- un morceau à enlever (« AUS »),
- un groupe d'outils (« WZG »),
- un outil (« WZ ») et/ou,
- un point de référence (« BPKT »).

9. Dispositif pour la commande de machines outils, en particulier de machines à usiner par électro-érosion, comportant :
a) un organe de gestion à mémoire (20) pour gérer une pluralité de processus d'usinage, dans lequel des groupes de processus d'usinage sont chaque fois associés à un ou plusieurs objets de l'usinage, par exemple la machine à usiner par électro-érosion (« WZM ») en tant que telle, une table à outils (« TIS »), une palette (« PAL ») et/ou un groupe de pièces à usiner (« WSG »), une pièce à usiner (« WST »), un groupe d'usinages (« GRU »), un usinage (« ARB »), une étape de travail (« AS »), un morceau à enlever (« AUS »), un groupe d'outils (« WZG »), un outil (« WZ ») et/ou, un point de référence (« BPKT » et dans lequel les objets de l'usinage sont décrits par, chaque fois, un état pris dans, chaque fois, un groupe d'état de l'usinage possibles ;
**caractérisé par**
b) un organe d'entrée (60) pour la sélection des états des objets de l'usinage dans un groupe respectivement associé d'états d'usinage possibles et/ou pour la modification des états des objets de l'usinage pendant l'usinage ;
c) un organe de surveillance pour surveiller les états actuels des objets de l'usinage ; et
d) un organe d'association (40) pour vérifier la compatibilité de cette sélection et/ou de cette modification avec les états d'autres objets de l'usinage et, au besoin, pour l'adaptation des états d'autres objets de l'usinage à cette sélection ou à cette modification des états.

10. Dispositif de commande selon la revendication 9, **caractérisé par** un organe d'association (40) pour associer automatiquement un état concernant un objet de l'usinage en tenant compte des états des objets de l'usinage d'un rang hiérarchiquement inférieur et/ou supérieur.

11. Dispositif de commande selon la revendication 9 ou 10, **caractérisé par** un organe d'entrée (40) pour entrer des états des différents objets de l'usinage avant, pendant et/ou après l'usinage.

12. Dispositif de commande selon la revendication 9, **caractérisé par le fait que** l'interface utilisateur constituée de l'organe d'entrée (60) et de l'organe d'affichage (50) est une interface graphique et que l'organe d'affichage (50) est conçu pour représenter au moins par extrait un groupe d'états appropriés d'un objet de l'usinage.
